# EUROPÄISCHE PATENTANMELDUNG

(11) **EP 4 610 157 A1**
(43) Veröffentlichungstag der Anmeldung: **03.09.2025**
(21) Anmeldenummer: 25158989.1
(22) Anmeldetag: 20.02.2025
(51) Int. Cl.: B62M 3/00, B62M 6/55, F16D 41/24

(54) **ANTRIEBSEINHEIT EINES FAHRZEUGS MIT EINER FREILAUFANORDNUNG**

(30) Priorität: 27.02.2024 DE 102024105418
(71) Anmelder: Robert Bosch GmbH, 70442 Stuttgart (DE)
(72) Erfinder: Haeussermann, Conrad, 72818 Trochtelfingen (DE); Zimmermann, Christoph, 72147 Nehren (DE); Hau, Wolfgang, 72555 Metzingen (DE); Zeltwanger, Daniel, 70597 Stuttgart (DE); Braun, Sigmund, 72127 Kusterdingen (DE); Maisch, Christian, 71065 Sindelfingen (DE); Klima, Joachim, 72127 Kusterdingen (DE); Nau, Alexander, 72800 Eningen Unter Achalm (DE)

(57) **Zusammenfassung**

Die Erfindung betrifft eine Antriebseinheit eines Fahrzeugs, insbesondere eines Elektrofahrrads, mit einer Freilaufanordnung, umfassend ein Abtriebselement, eine Welle, einen Freilauf mit Freilaufelementen, und ein Gehäuse, wobei der Freilauf zwischen dem Abtriebselement und der Welle angeordnet ist und eingerichtet ist, um in einer Sperrkonfiguration eine Drehmomentübertragung zwischen dem Abtriebselement und der Welle zu bewirken und in einer Freilaufkonfiguration die Drehmomentübertragung zu verhindern, und wobei der Freilauf mindestens ein Lagerelement aufweist, mittels welchem die Welle und das Abtriebselement relativ zueinander drehbar gelagert sind.

## Beschreibung

### Stand der Technik

Die vorliegende Erfindung betrifft eine Antriebseinheit eines Fahrzeugs mit einer Freilaufanordnung, sowie ein Fahrzeug.

In Fahrzeugen, wie beispielsweise Elektrofahrrädern, sind Freiläufe bekannt, welche dazu eingerichtet sind, eine Verbindung zwischen einer angetriebenen Welle und einem Motorgetriebe, welches mit dem Antriebsmotor verbunden ist, zu unterbrechen, wenn die angetriebene Welle bezüglich der vorwärts gerichteten Drehrichtung schneller läuft als ein Ausgang des Motorgetriebes, das heißt in derjenigen Drehrichtung, welche einen Antrieb des Fahrzeugs in vorwärts gerichteter Fahrtrichtung verursacht. Üblicherweise sind derartige Freiläufe im Bereich von Tretlagern des Elektrofahrrads angeordnet.

### Offenbarung der Erfindung

Die erfindungsgemäße Antriebseinheit mit den Merkmalen des Anspruchs 1 zeichnet sich demgegenüber durch eine vorteilhafte kompakte Konstruktion aus, die bei einer einfachen Herstellbarkeit mit wenigen Bauteilen einen besonders geringen Bauraum beansprucht. Dies wird erfindungsgemäß erreicht durch eine Antriebseinheit eines Fahrzeugs, vorzugsweise eines Elektrofahrrads, mit einer Freilaufanordnung umfassend ein Abtriebselement, eine Welle, und einen Freilauf. Der Freilauf weist mehrere Freilaufelemente auf und ist zwischen dem Abtriebselement und der Welle angeordnet und eingerichtet, um in einer Sperrkonfiguration eine Drehmomentübertragung zwischen dem Abtriebselement und der Welle zu bewirken und in einer Freilaufkonfiguration die Drehmomentübertragung zu verhindern, insbesondere indem der Freilauf in der Freilaufkonfiguration eine freie Rotation von Abtriebselement und Welle zueinander erlaubt. Dabei weist der Freilauf mindestens ein Lagerelement auf mittels welchem die Welle und das Abtriebselement relativ zueinander drehbar gelagert sind.

Als Welle kann insbesondere ein beliebiges Übertragungselement zur Drehmomentübertragung angesehen werden. Bevorzugt kann die Welle eine Abtriebsfunktion als auch eine Antriebsfunktion bereitstellen. Insbesondere kann die Welle mit einem weiteren Antriebsstrang des Fahrzeugs, beispielsweise über ein Kettenblatt und vorzugsweise über eine Kette oder ein alternatives Übertragungselement, verbunden sein.

Beispielsweise kann zusätzlich ein Gehäuse vorgesehen sein. Das Gehäuse kann beispielsweise ein Gehäuse zur Halterung von Komponenten der Freilaufanordnung und beispielsweise weiteren Komponenten des Fahrzeugs sein. Insbesondere ist das Gehäuse somit ein feststehender Teil, relativ zu welchem zumindest die Welle rotierbar angeordnet ist.

Insbesondere wird als Freilaufelement eine Einrichtung angesehen, welche geeignet ist, um eine Drehmomentübertragung zwischen Abtriebselement und Welle herzustellen und freizugeben, vorzugsweise jeweils in beide Drehrichtungen.

Bevorzugt wird als Lagerelement eine Einrichtung angesehen, welche eine relative Rotation von Welle und Abtriebselement zueinander erlaubt und zugleich eine Halterung und Positionierung von Welle und Abtriebselement, insbesondere in radialer Richtung und bevorzugt zusätzlich in axialer Richtung, relativ zueinander bewirkt.

Insbesondere kann als Abtriebselement ein beliebiges Übertragungselement zur Drehmomentübertragung angesehen werden. Bevorzugt kann das Abtriebselement eine Abtriebsfunktion als auch eine Antriebsfunktion bereitstellen. Das Abtriebselement kann bevorzugt ein Zahnrad eines Getriebes des Fahrzeugs sein, wie beispielsweise das letzte Zahnrad eines Getriebes einer Antriebsanordnung des Fahrzeugs.

Mit anderen Worten wird eine Freilaufanordnung bereitgestellt, welche einen Freilauf zwischen dem Abtriebselement und der Welle, an die insbesondere ein Abtriebsmoment übertragen wird, das beispielsweise zum Vortrieb des Fahrzeugs vorgesehen ist, aufweist. Dabei weist der Freilauf als integraler Bestandteil ein Lagerelement auf, welches zumindest teilweise zu einer Lagerung von Welle und Abtriebselement relativ zueinander beiträgt.

Vorzugsweise kann das Lagerelement des Freilaufs dabei als einziges Element zur Lagerung von Welle und Abtriebselement relativ zueinander vorgesehen sein. Alternativ bevorzugt können weitere Elemente, insbesondere innerhalb und/oder außerhalb des Freilaufs bzw. als separate Bauteile zum Freilauf zusätzlich zum Lagerelement vorgesehen sein, welche zur Lagerung beitragen.

Die Freilaufanordnung bietet dabei den Vorteil, dass eine besonders einfache und kostengünstige Konstruktion bereitgestellt werden kann, welche gleichzeitig eine Freilauffunktion und eine Lagerungsfunktion ermöglicht. Dadurch, dass zumindest ein Teil der Lagerung in den Freilauf integriert ist, kann eine die Freilaufanordnung umfassende Antriebsanordnung des Fahrzeugs mit besonders wenigen Bauteilen und damit leichtgewichtig und kostengünstig bereitgestellt werden. Zudem kann eine Fehleranfälligkeit durch eine verringerte Anzahl an Bauteilen reduziert werden. Durch den reduzierten Bauraum der Freilaufanordnung kann dabei zudem mehr Platz für weitere Komponenten der Antriebsanordnung geschaffen werden, wodurch eine optimierte und besonders kompakte Konstruktion der gesamten Antriebsanordnung ermöglicht werden kann. Insbesondere wenn sich der Freilauf in der Freilaufkonfiguration befindet kann dabei durch das Lagerelement mit der zusätzlichen Lagerungsfunktion eine relative Positionierung von Abtriebselement und Welle zueinander besonders präzise definiert werden. Beispielsweise kann dadurch eine Exzentrizität auf einfache Weise besonders zuverlässig vermieden werden.

Die Unteransprüche haben bevorzugte Weiterbildungen der Erfindung zum Inhalt.

Bevorzugt umfasst das Lagerelement mindestens ein Gleitlager. Besonders bevorzugt ist das mindestens eine Gleitlager in Form einer Gleitlagerscheibe ausgebildet, welche vorzugsweise axial unmittelbar benachbart zu den Freilaufelementen angeordnet ist. Vorzugsweise können als Gleitlager genau zwei Gleitlagerscheiben vorgesehen sein, welche axial beidseitig der Freilaufelemente angeordnet sind. Der Freilauf mit dem Gleitlager kann derart ausgebildet sein, dass jederzeit ausschließlich durch eine Gleitreibung mittels des Gleitlagers die Lagerung erfolgt. Alternativ bevorzugt kann der Freilauf mit dem Gleitlager derart ausgebildet sein, insbesondere durch einen kleinen radialen Spalt, vorzugsweise zwischen Gleitlager und Welle, dass die radiale Lagerung durch die Freilaufelemente erfolgt, und das Gleitlager insbesondere ausschließlich eine axiale Lagerung bewirkt. Durch das Gleitlager kann eine besonders einfache, robuste und kostengünstige Lagerung bereitgestellt werden.

Besonders bevorzugt umfasst das Lagerelement ein Wälzlager, insbesondere mit mindestens einem, bevorzugt mehreren Wälzkörpern. Dadurch kann eine Lagerung mit besonders niedriger Reibung bereitgestellt werden.

Vorzugsweise ist das mindestens eine Lagerelement axial neben den Freilaufelementen des Freilaufs angeordnet. Das heißt, Lagerelement und Freilaufelemente sind vollständig axial nebeneinander, beispielsweise zumindest teilweise oder vollständig radial auf einer Höhe, angeordnet. Alternativ bevorzugt sind die Freilaufelemente und das mindestens eine Lagerelement zumindest teilweise axial überlappend angeordnet. Das heißt, Lagerelement und Freilaufelemente sind in axialer Richtung zumindest teilweise auf gleicher Höhe, und insbesondere radial nebeneinander angeordnet.

Weiter bevorzugt ist der Freilauf derart ausgebildet, dass die Lagerung der Welle relativ zum Abtriebselement in der Freilaufkonfiguration, insbesondere ausschließlich, durch das mindestens eine Lagerelement erfolgt, wobei die Lagerung der Welle relativ zum Abtriebselement in der Sperrkonfiguration, insbesondere ausschließlich, durch die Freilaufelemente erfolgt. Dadurch kann insbesondere in der Sperrkonfiguration eine besonders robuste Konfiguration des Freilaufs bereitgestellt werden, um eine optimale Drehmomentübertragung zu ermöglichen.

Vorzugsweise ist der Freilauf derart ausgebildet, dass eine radiale Lagerung der Welle relativ zum Abtriebselement ausschließlich durch die Freilaufelemente erfolgt. Dabei ist das mindestens eine Lagerelement eingerichtet zur, insbesondere ausschließlichen, axialen Lagerung der Welle relativ zum Abtriebselement. Bevorzugt kann das Lagerelement in diesem Fall für eine einfache und kostengünstige Konstruktion ein Gleitlager umfassen. Dadurch kann der Freilauf besonders einfach und robust ausgebildet werden, um gleichzeitig die Freilauffunktion und die Lagerungsfunktion bereitstellen zu können.

Besonders bevorzugt ist der Freilauf als ein Klemmrollenfreilauf ausgebildet. Das heißt, die Freilaufelemente sind insbesondere durch die Klemmrollen des Klemmrollenfreilaufs gebildet. Dadurch kann bei einfacher und kostengünstiger Funktion eine zuverlässige Freilauf- und Sperrfunktion bereitgestellt werden. Zudem kann die Integration der Lagerungsfunktion in den Freilauf auf einfache und zuverlässige Weise erfolgen, wobei eine präzise Lagerung ermöglicht werden kann, insbesondere im Hinblick auf eine zuverlässige Konzentrizität von Abtriebselement und Welle.

Bevorzugt weist der Freilauf eine erste Anzahl an Klemmrollen auf, welche die Freilaufelemente bilden, wobei der Freilauf zusätzlich eine zweite Anzahl an Lagerrollen aufweist, welche das Lagerelement bilden. Insbesondere sind Klemmrollen und Lagerrollen in einem gleichmäßigen Muster regelmäßig um den Umfang des Freilaufs verteilt angeordnet. Besonders bevorzugt liegen die Lagerrollen in einem um den Umfang gleichmäßig verteilten Muster vor. Beispielsweise können jeweils zwei Lagerrollen diametral gegenüberliegend angeordnet sein. Insbesondere kann der Freilauf einen Innenring und einen Außenring umfassen, wobei die Klemmrollen und die Lagerrollen zwischen Innenring um Außenring angeordnet sind, und vorzugsweise mittels eines Käfigs relativ zueinander gehalten werden. Beispielsweise kann der Käfig auch genutzt werden zur Betätigung der Freilauffunktion. Damit kann eine besonders einfache und kostengünstige Konstruktion mit wenigen Bauteilen bereitgestellt werden.

Vorzugsweise beträgt die zweite Anzahl mindestens 2, bevorzugt 4. Insbesondere kann somit eine hohe Anzahl an Freilaufelementen bereitgestellt werden, um die Freilauffunktion besonders zuverlässig bereitstellen zu können. Bevorzugt umfasst der Freilauf Klemmgeometrien, welche insbesondere gemeinsam mit den Klemmrollen die Freilauffunktion bereitstellen können. Die Klemmgeometrien sind dabei ausschließlich geometrisch im Bereich der Klemmrollen angeordnet, das heißt insbesondere an den Klemmrollen entsprechenden Umfangspositionen des Freilaufs. Beispielsweise können die Klemmgeometrien am Innenring und/oder Außenring des Freilaufs angeordnet sein. Dadurch kann eine einfache und kostengünstige Herstellung des Freilaufs ermöglicht werden.

Besonders bevorzugt weist der Freilauf Lagergeometrien auf, welche, insbesondere ausschließlich, im Bereich der Lagerrollen angeordnet sind. Das heißt, die Lagergeometrien sind an den Lagerrollen entsprechenden Umfangspositionen des Freilaufs angeordnet. Insbesondere sind die Lagergeometrien dabei derart ausgebildet, dass, wenn sich der Freilauf in der Freilaufkonfiguration befindet, die Lagergeometrien in Kontakt mit den Lagerrollen sind. Besonders bevorzugt ist der Freilauf dabei derart ausgebildet, dass in der Freilaufkonfiguration kein klemmender Kontakt zwischen Klemmrollen und Klemmgeometrien vorliegt. Das heißt, in der Freilaufkonfiguration kann ein Abrollen bzw. Abwälzen der Lagerrollen an den Lagergeometrien erfolgen, um die Lagerung ohne Drehmomentübertragung zu bewirken.

Vorzugsweise umfasst die Freilaufanordnung ferner mindestens ein, bevorzugt mehrere, zusätzliche separate Lager zur Lagerung der Welle relativ zum Abtriebselement. Das mindestens eine zusätzliche separate Lager kann dabei separat vom Freilauf und von diesem beabstandet angeordnet sein.

Bevorzugt ist die Welle ausschließlich mittels des Freilaufs relativ zum Abtriebselement gelagert. Bevorzugt kann der Freilauf dabei an mindestens zwei unterschiedlichen axialen Positionen der Welle jeweils Freilaufelemente und Lagerelemente umfassen. Damit kann eine besonders einfache und kostengünstige Konstruktion mit wenigen Bauteilen bereitgestellt werden.

Besonders bevorzugt ist der Freilauf als bidirektionaler Freilauf ausgebildet. Das heißt, die Freilaufkonfiguration sowie die Sperrkonfiguration kann jeweils bezüglich beiden Drehrichtungen umgesetzt werden. Vorzugsweise kann dies mittels einer aktiv steuerbaren Betätigung oder alternativ über Reibkräfte erfolgen.

Weiterhin führt die Erfindung zu einem Fahrzeug, insbesondere einem Elektrofahrrad, umfassend die beschriebene Freilaufanordnung.

Bevorzugt umfasst das Fahrzeug ferner eine Antriebseinheit, welche mit dem Abtriebselement, insbesondere drehmomentübertragend, verbunden ist, und einen Kurbeltrieb, der, insbesondere drehfest, mit der Welle verbunden ist. Insbesondere ist der Freilauf somit zwischen einem Getriebe der Antriebseinheit und der Welle, welche insbesondere eine Tretwelle bzw. Kurbelwelle des Fahrzeugs bildet, angeordnet. Der Freilauf kann beispielsweise auch als Motorfreilauf bezeichnet werden.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte schematische Ansicht eines Fahrzeugs mit einer Freilaufanordnung gemäß einem ersten Ausführungsbeispiel der Erfindung,
- Figur 2: eine Detail-Schnittansicht der Freilaufanordnung der Figur 1,
- Figur 3: eine weitere Detail-Schnittansicht der Freilaufanordnung der Figur 1,
- Figur 4: eine Detail-Schnittansicht einer Freilaufanordnung gemäß einem zweiten Ausführungsbeispiel der Erfindung,
- Figur 5: eine alternative Ansicht der Freilaufanordnung der Figur 4, und
- Figur 6: ein Detail der Freilaufanordnung der Figuren 4 und 5.

### Bevorzugte Ausführungsformen der Erfindung

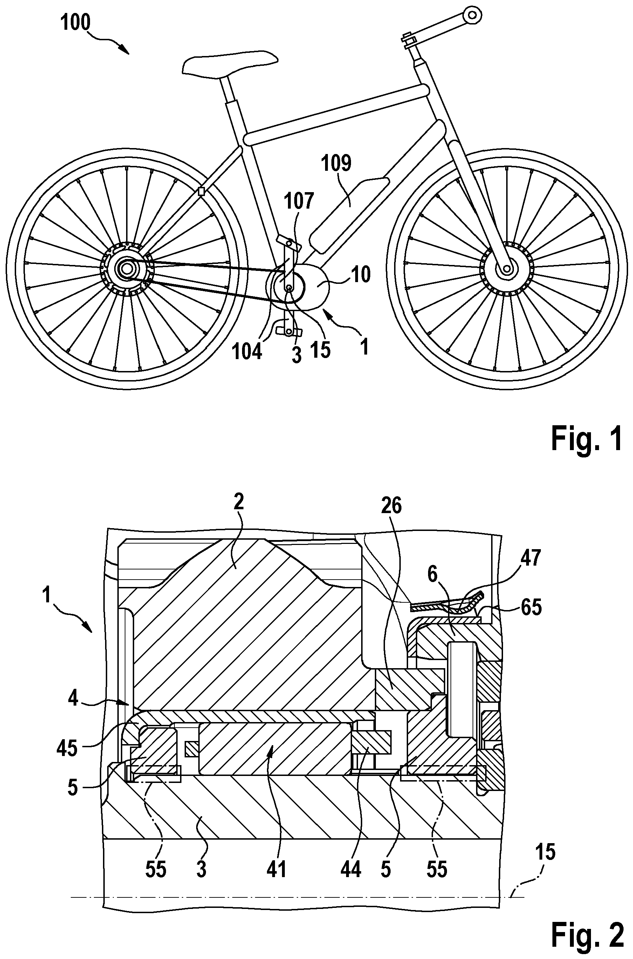

Figur 1 zeigt eine vereinfachte schematische Ansicht eines Fahrzeugs 100, das eine Freilaufanordnung 1 gemäß einem ersten Ausführungsbeispiel der Erfindung umfasst. Bei dem Fahrzeug 100 handelt es sich um ein mit Muskelkraft und/oder Motorkraft betreibbares Fahrzeug 100, im Detail um ein Elektrofahrrad.

Das Elektrofahrrad 100 umfasst eine Antriebseinheit 10, die einen Motor umfasst, der insbesondere ein Elektromotor ist. Der Motor kann mittels eines elektrischen Energiespeichers 109 des Elektrofahrrads 100 mit elektrischer Energie versorgt werden.

Die Antriebseinheit 10 ist im Bereich eines Tretlagers des Elektrofahrrads 100 angeordnet. Durch ein mittels des Motors erzeugten Motordrehmoments kann eine durch Muskelkraft erzeugte Tretkraft eines Fahrers des Elektrofahrrads 100 motorisch unterstützt werden.

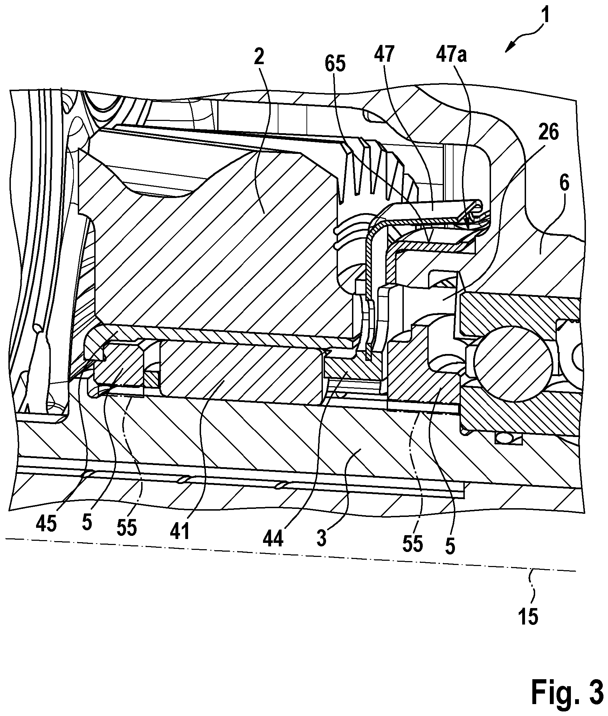

Die Muskelkraft des Fahrers kann dabei über einen Kurbeltrieb, welcher Kurbeln 104 umfasst, auf eine Welle 3, aufgebracht werden. Die Welle 3 erstreckt sich entlang einer Abtriebsachse 15. Koaxial zur Welle 3 ist ein Abtriebselement 2, welches insbesondere ein Zahnrad ist, der Antriebseinheit 10 angeordnet (vgl. Figur 2 und 3).

Das Abtriebselement 2 bildet dabei das letzte Zahnrad eines (nicht dargestellten) Getriebes der Antriebseinheit 10. Über das Getriebe kann der Motor das Motormoment an das Abtriebselement 2 übertragen.

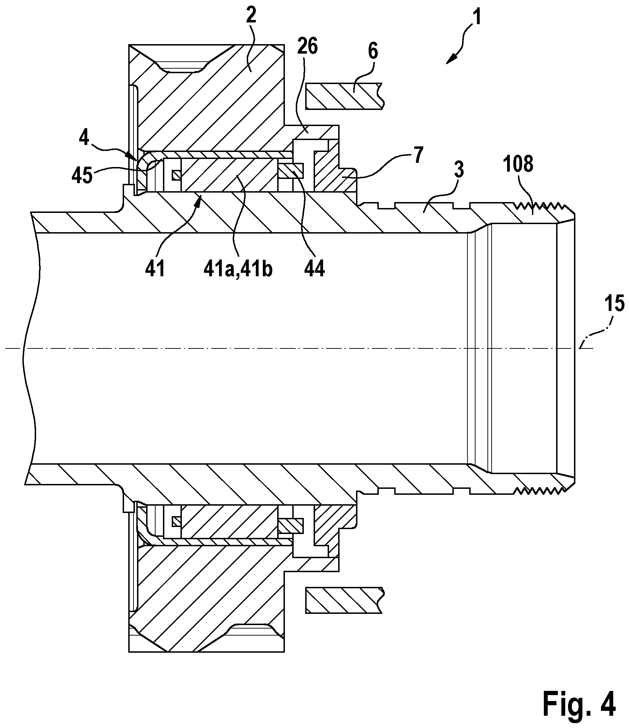

Die Welle 3 umfasst zudem einen Verbindungsbereich 108 (vgl. zweites Ausführungsbeispiel in Figur 4), an welchem ein Abtriebselement 107, welches insbesondere ein Kettenblatt ist, drehfest befestigbar ist (vgl. Figur 1).

Zwischen dem Abtriebselement 2 und der Welle 3 befindet sich ein Freilauf 4, welcher im dargestellten ersten Ausführungsbeispiel als Klemmrollenfreilauf ausgebildet ist und eine Vielzahl an um dem Umfang verteilten Freilaufelemente 41 aufweist, die insbesondere als Klemmrollen ausgebildet sind.

Bei relativer Rotation des Abtriebselements 2 in Sperrrichtung zur Welle 3 sperrt der Freilauf 4 und bewirkt eine Drehmomentübertragung zwischen Abtriebselement 2 und Welle 3. In diesem Fall befindet sich der Freilauf 4 in einer Sperrkonfiguration.

Bei entgegengesetzter relativer Rotation des Abtriebselements 2 in Freilaufrichtung relativ zur Welle 3 gibt der Freilauf 4 die Rotation frei und verhindert die Drehmomentübertragung. In diesem Fall befindet sich der Freilauf 4 in einer Freilaufkonfiguration.

Der Freilauf 4 ist dabei als ein bidirektionaler Freilauf ausgebildet. Das heißt, der Freilauf 4 kann in beide relativen Drehrichtungen von Abtriebselement 2 und Welle 3 öffnen, das heißt eine freie Rotation ohne Drehmomentübertragung erlauben. Dies kann durch eine gezielte gesteuerte Betätigung eines Freilaufkäfigs 44 des Freilaufs 4 erfolgen.

Der Freilaufkäfig 44 ist dabei vorgesehen, um in Umfangsrichtung vorgegebene Abstände der Klemmrollen 41a und Lagerrollen 41b sicherzustellen. Zudem kann der Freilaufkäfig 44 beispielsweise in bestimmten Betriebszuständen gezielt eine Bewegung der Klemmrollen 41a derart bewirken, dass diese in eine Freilaufkonfiguration gebracht werden, in der der gesamte Freilauf 4 geöffnet ist.

Die Bewegung des Freilaufkäfigs 44 derart, um die gesteuerte Betätigung der Freilauffunktion, das heißt die Bidirektionalität durch entsprechende Bewegung der Klemmrollen 41a, bereitzustellen, kann mittels Reibelementen 47 erfolgen, welche drehfest mit dem Freilaufkäfig 44 verbunden sind.

In Figur 3 ist dabei die Verbindung des Freilaufkäfigs 44 mit den blechförmig ausgebildeten Reibelementen 47 zu erkennen. Figur 3 zeigt eine Detail-Schnittansicht der Freilaufanordnung 1 analog der Figur 2, wobei die Schnittebene anders positioniert ist, nämlich mittig in einem der Reibeelemente 47. Die Reibelemente 47 können sich dabei in radialer Richtung durch Aussparungen des Abtriebselements 2 oder eines Teilbereichs 26 des Abtriebselements 2 erstrecken, wobei die Aussparungen entsprechend dimensioniert sind, dass eine gewisse relative Rotation zwischen Abtriebselement 2 und Freilaufkäfig 44 mit Reibelementen 47 ermöglicht wird.

Die Reibelemente 47 sind als Federelemente ausgebildet, welche mehrere um den Umfang verteilte Reibflächen 47a mittels einer Federkraft nach radial innen gegen eine Gehäuse-Reibfläche 65 am Gehäuse 6 drücken. Dadurch wird bei entsprechender relativer Rotation ein Reibmoment zwischen Gehäuse 6 und, über die Reibelemente 47, Freilaufkäfig 44 erzeugt, wodurch der Freilaufkäfig 44 in Umfangsrichtung relativ rotiert wird, um die Klemmrollen 41a zu bewegen und damit den Freilauf 4 zu sperren oder freizugeben.

Die Antriebseinheit 10 kann dabei bei gesperrtem Freilauf 4 über das Abtriebselement 2 und den Freilauf 4 die Welle 3 mittels des erzeugten Motordrehmoments antreiben.

Zudem umfasst die Antriebseinheit 10 ein Gehäuse 6, welches zur Aufnahme und Halterung von Komponenten der Antriebseinheit 10 und Freilaufanordnung 1 vorgesehen ist. Zudem kann das Gehäuse 6 eingerichtet sein zur Montage an einem Fahrradrahmen des Elektrofahrrads 100.

Die Freilaufanordnung 1 ist ferner derart ausgebildet, dass als integraler Bestandteil des Freilaufs 4 ein Lager zur Lagerung von Abtriebselement 2 und Welle 3 relativ zueinander vorgesehen ist. Hierfür umfasst der Freilauf 4 ferner zwei Lagerelemente 5, welche jeweils als Gleitlager ausgebildet sind. Insbesondere sind die beiden Lagerelemente 5 jeweils als Gleitlagerscheiben ausgebildet, welche axial neben den Freilaufelementen 41 angeordnet sein. Das heißt, die Freilaufelemente 41 sind axial zwischen den Lagerelementen 5 angeordnet.

Im Detail ist ein erstes Lagerelement 5 (in Figur 2 rechts) radial zwischen der Welle 3 und einem Teilbereich 26 des Abtriebselements 2 angeordnet. Ein zweites Lagerelement 5 (in Figur 2 links) ist radial zwischen der Welle 3 und einer Freilaufhülse 45, welche insbesondere eine radial äußerste Hülse des Freilaufs 4 bildet, angeordnet. Insbesondere ist das Abtriebselement 2 unmittelbar auf einem Außenumfang der Freilaufhülse 45 angeordnet.

In dem in den Figuren 1 bis 3 gezeigten ersten Ausführungsbeispiel ist der Freilauf 4 dabei derart ausgebildet, dass die radiale Lagerung der Welle 3 relativ zum Abtriebselement 2 in der Freilaufkonfiguration ausschließlich durch die Lagerelemente 5 erfolgt. Dabei ist der Freilauf 4 zudem derart ausgebildet, dass in der Sperrkonfiguration durch entsprechende Dimensionierung der Freilaufelemente 41 und Lagerelemente 5 die radiale Lagerung ausschließlich durch die Freilaufelemente 41 erfolgt. In dieser Konfiguration wird ein geringfügiger radialer Spalt am radial inneren Bereich 55 zwischen Lagerelementen 5 und Welle 3 gebildet, sodass kein radialer Kontakt vorliegt.

In der Sperrkonfiguration kann jedoch vorgesehen sein, dass die Lagerelemente 5 zumindest einen Teil einer axialen Lagerung von Abtriebselement 2 und Antriebswelle 3 zueinander bilden, wobei die axiale Lagerung direkt oder indirekt, beispielsweise über weitere Bauteile, erfolgen kann.

In einer alternativen (nicht dargestellten) modifizierten Ausführungsform des ersten Ausführungsbeispiels kann der Freilauf 4 alternativ derart ausgebildet sein, dass im Durchmesser geringfügig vergrößerte Lagerelemente 5 vorgesehen sind. In dieser alternativen modifizierten Ausführungsform bewirken die Lagerelemente 5 weder in der Sperrkonfiguration, noch in der Freilaufkonfiguration eine radiale Lagerung, sondern sind ausschließlich vorgesehen, um zumindest einen Teil einer axialen Lagerung von Abtriebselement 2 und/oder Antriebswelle 3 zu bilden.

Die Freilaufanordnung 1 bietet dabei den Vorteil einer besonders einfachen und kostengünstigen Konstruktion. Durch die zumindest teilweise Integration des Lagers unmittelbar in den Freilauf 4 kann eine Konstruktion der Freilaufanordnung 1 mit wenigen Bauteilen und besonders kompakt bereitgestellt werden.

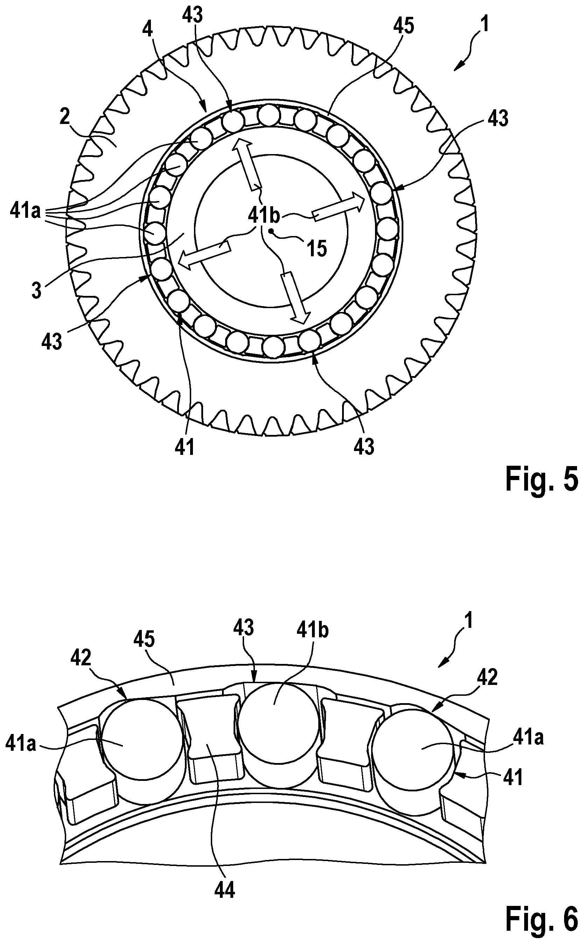

Figur 4 zeigt eine Detail-Schnittansicht einer Freilaufanordnung 1 gemäß einem zweiten Ausführungsbeispiel der Erfindung. In den Figuren 5 und 6 sind alternative Detail-Ansichten der Freilaufanordnung der Figur 4 dargestellt. Das zweite Ausführungsbeispiel entspricht im Wesentlichen dem ersten Ausführungsbeispiel der Figuren 1 bis 3, mit dem Unterschied einer alternativen Ausgestaltung der Lagerung. Im zweiten Ausführungsbeispiel erfolgt die Lagerung dadurch, dass die Lagerelemente 5 in Form eines Wälzlagers ausgebildet sind.

Im Detail sind die Lagerelemente 5 hierbei als Teile des Klemmrollenfreilaufs ausgebildet, derart, dass der Freilauf 4 eine erste Anzahl an Klemmrollen 41a aufweist, welche die Freilaufelemente 41 bilden und zudem eine zweite Anzahl an Lagerrollen 41b aufweist, welche das Lagerelement 5 bilden. Insbesondere sind in diesem Fall die Lagerelemente 5 und Freilaufelemente 41 axial überlappend angeordnet.

Im gezeigten Ausführungsbeispiel sind insgesamt vier Lagerrollen 41b vorgesehen, welche gleichmäßig um den Umfang verteilt angeordnet sind und zudem derart angeordnet sind, dass jeweils genau zwei Lagerrollen 41b diametral gegenüberliegend angeordnet sind (vgl. Figur 5).

Die Klemmrollen 41a und die Lagerrollen 41b können dabei identische Geometrien, oder alternativ unterschiedliche Geometrien aufweisen. Bevorzugt sind Klemmrollen 41a und Lagerrollen 41b jeweils als zylindrische Rollen ausgebildet.

Im Bereich jeder Lagerrolle 41b weist der Freilauf 4 dabei eine Lagergeometrie 43 in der Freilaufhülse 45 auf. Die Lagergeometrie 43 ist dabei in Form einer Vertiefung in der Freilaufhülse 45 ausgebildet, welche durch eine zylindrische Mantelfläche begrenzt ist. Dadurch können die Lagerrollen 41b in beide relativen Drehrichtungen von Abtriebselement 2 und Welle 3 frei rollen, um eine leichtgängige Lagerung in radialer Richtung bereitzustellen.

Ferner umfasst der Freilauf 4 pro Klemmrolle 41a jeweils eine Klemmgeometrie 42 in der Freilaufhülse 45. Die Klemmgeometrie 43 ist bevorzugt schräg bezüglich der Tangentialrichtung angeordnet und derart ausgebildet, um je nach Konfiguration des Freilaufs 4 ein Einklemmen der Klemmrollen 41a zu bewirken, um die Sperrkonfiguration bereitzustellen, oder um die Klemmrollen 41a freizugeben, um die Freilaufkonfiguration bereitzustellen.

## Patentansprüche

1. Antriebseinheit (10) eines Fahrzeugs (100), insbesondere eines Elektrofahrrads, mit einer Freilaufanordnung, umfassend:
- ein Abtriebselement (2),
- eine Welle (3), und
- einen Freilauf (4) mit Freilaufelementen (41),
- wobei der Freilauf (4) zwischen dem Abtriebselement (2) und der Welle (3) angeordnet ist und eingerichtet ist, um in einer Sperrkonfiguration eine Drehmomentübertragung zwischen dem Abtriebselement (2) und der Welle (3) zu bewirken und in einer Freilaufkonfiguration die Drehmomentübertragung zu verhindern, und
- wobei der Freilauf (4) mindestens ein Lagerelement (5) aufweist, mittels welchem die Welle (3) und das Abtriebselement (2) relativ zueinander drehbar gelagert sind.

2. Antriebseinheit nach Anspruch 1, wobei das Lagerelement (5) mindestens ein Gleitlager umfasst.

3. Antriebseinheit nach einem der vorhergehenden Ansprüche, wobei das mindestens eine Lagerelement (5) ein Wälzlager umfasst.

4. Antriebseinheit nach einem der vorhergehenden Ansprüche, wobei das mindestens eine Lagerelement (5) axial neben den Freilaufelementen (41) des Freilaufs (4) angeordnet ist, oder wobei das mindestens eine Lagerelement (5) und die Freilaufelemente (41) zumindest teilweise axial überlappend angeordnet sind.

5. Antriebseinheit nach einem der vorhergehenden Ansprüche, wobei der Freilauf (4) derart ausgebildet ist, dass die Lagerung von Welle (3) Abtriebselement (2) relativ zueinander in der Freilaufkonfiguration durch das mindestens eine Lagerelement (5) und in der Sperrkonfiguration durch die Freilaufelemente (41) erfolgt.

6. Antriebseinheit nach einem der vorhergehenden Ansprüche, wobei der Freilauf (4) derart ausgebildet ist, dass eine radiale Lagerung von Welle (3) und Abtriebselement (2) relativ zueinander ausschließlich durch die Freilaufelemente (41) erfolgt, und wobei das mindestens eine Lagerelement (5) eingerichtet ist zur axialen Lagerung und Welle (3) und Abtriebselement (2) relativ zueinander.

7. Antriebseinheit nach einem der vorhergehenden Ansprüche, wobei der Freilauf (4) als Klemmrollenfreilauf ausgebildet ist.

8. Antriebseinheit nach Anspruch 7, wobei der Freilauf (4) eine erste Anzahl an Klemmrollen (41a) aufweist, welche die Freilaufelemente (41) bilden, und wobei der Freilauf (4) eine zweite Anzahl an Lagerrollen (41b) aufweist, welche das Lagerelement (5) bilden.

9. Antriebseinheit nach Anspruch 8, wobei die zweite Anzahl mindestens 2, bevorzugt 4, beträgt.

10. Antriebseinheit nach einem der Ansprüche 7 bis 9, wobei der Freilauf (4) derart ausgebildet ist, dass Klemmgeometrien (42) ausschließlich geometrisch im Bereich der Klemmrollen (41a) angeordnet ist.

11. Antriebseinheit nach einem der Ansprüche 7 bis 9, wobei der Freilauf (4) Lagergeometrien (43) geometrisch im Bereich der Lagerrollen (41b) aufweist, welche insbesondere derart ausgebildet sind, dass in der Freilaufkonfiguration die Lagerrollen (41b) in Kontakt mit den Lagergeometrien (43) sind.

12. Antriebseinheit nach einem der vorhergehenden Ansprüche, ferner umfassend mindestens ein zusätzliches separates Lager (7) zur Lagerung von Welle (3) und Abtriebselement (2) relativ zueinander.

13. Antriebseinheit nach einem der Ansprüche 1 bis 11, wobei die Welle (3) und das Abtriebselement (2) ausschließlich mittels des Freilaufs (4) relativ zueinander gelagert sind.

14. Antriebseinheit nach einem der vorhergehenden Ansprüche, wobei der Freilauf (4) als bidirektionaler Freilauf ausgebildet ist.

15. Fahrzeug, insbesondere Elektrofahrrad, umfassend eine Antriebseinheit (10) nach einem der vorhergehenden Ansprüche.
